# EUROPEAN PATENT APPLICATION

(11) **EP 4 636 993 A1**
(43) Date of publication of application: **22.10.2025**
(21) Application number: 25170826.9
(22) Date of filing: 15.04.2025
(51) Int. Cl.: H02K 1/18, H02K 5/20, H02K 15/028

(54) **ELECTRIC DRIVE FOR A VEHICLE AND METHOD FOR MANUFACTURING AN ELECTRIC DRIVE FOR A VEHICLE**

(30) Priority: 17.04.2024 DE 102024110707
(71) Applicant: Valeo eAutomotive Germany GmbH, 91056 Erlangen (DE)
(72) Inventor: Lechner, Tobias, 91056 Erlangen (DE); Dehm, Oliver, 91056 Erlangen (DE); Felber, Bernd, 91056 Erlangen (DE)
(74) Representative: Valeo Powertrain Systems

(57) **Abstract**

Electric drive (1) for a vehicle (100), the electric drive (1) comprising:
- a stator (3) comprising a stator winding (5) and a stator core (6) having a longitudinal axis (7) and opposing axial first and second face sides (8, 9), the stator winding (5) forming a first winding head (10) at the first face side (8) and a second winding head (11) at the second face side (9);
- a housing (12) with an interior (13) that forms a stator accommodation space (14) and a radial stop (15), which delimits the stator accommodation space (14) axially; and
- a spacer (26) being attached to the first face side (8) at a radial position more outward than the first winding head (10) and abutting against the stop (15).

## Description

The present invention relates to an electric drive for a vehicle, the electric drive comprising: a stator comprising a stator winding and a stator core having a longitudinal axis and opposing axial first and second face sides, the stator winding forming a first winding head at the first face side and a second winding head at the second face side; and a housing with an interior that forms a stator accommodation space and a radial stop, which delimits the stator accommodation space axially.

Aside the invention relates to a method for manufacturing an electric drive for a vehicle.

Electric drives for propelling a vehicle are commonly known. Therein, it is known to dispose an electric machine of the electric drive inside a housing.

Exemplarily, EP 3 972 098 A1 discloses an arrangement for an electric machine. The electric machine comprises a housing with a stopper to define an axial position of a stator within the housing. The stator is arranged in the housing and comprises a stator lamination stack, stator windings arranged in the stator lamination stack and a stator end disc arranged on the axial end of the stator lamination stack. Conventional electric drives are configured such that the stator matches exactly into a stator accommodation space, which is limited by a stop. This requires a specific design of the housing for each kind of stator to be used in the electric drive.

It is an object of the present invention to provide a more variable design of an electric drive for a vehicle.

According to the invention, this object is solved by an electric drive for a vehicle as initially described, further comprising a spacer being attached to the first face side at a radial position more outward than the first winding head and abutting against the stop.

The electric drive for a vehicle according to the invention comprises a stator. The stator comprises a stator winding and a stator core. The stator core has a longitudinal axis. The stator core has opposing axial first and second face sides. The stator winding forms a first winding head at the first face side. The stator winding forms a second winding head at the second face side. The stator according to the invention further comprises a housing with an interior. The interior forms a stator accommodation space. The interior forms a radial stop. The stop delimits the stator accommodation space axially. The electric drive according to the invention further comprises a spacer. The spacer is attached to the first face side at a radial position more outward than the first winding head. The spacer abuts against the stop.

The present invention is based upon the consideration to use the housing of the electric drive for different sizes of stators. Therein, the spacer adapts the length of the stator to the length stator accommodation space. Consequently, the electric drive according to the invention is provided with a single housing design that is capable of accommodation stators with different lengths without the necessity to design dedicated housings for a respective stator length. This decreases the costs of manufacturing electric drives in different power classes and facilitates the manufacturing process as only a single type of housing has to be provided. As an additional advantage, using the spacer allows to arrange stators of different lengths near a given center of mass of the electric drive.

In particular, the terms "axial", "radial" and "circumferential" refer to the longitudinal axis of the stator core.

Preferably, the stator winding is a hair pin winding. The stator may be made of a plurality metal sheets stacked axially.

The housing may be made of metal. The housing may be a casted housing. The stator accommodation space may be a cylindrical space limited radially by a wall of the housing. The stator accommodation space may be open on one or two axial sides thereof. The stop may extend circumferentially about the longitudinal axis. Alternatively, the stop may be formed at one or multiple circumferential separate positions. Typically, the stop forms an integral part of the housing.

The housing may comprise a main part forming the stator accommodation space. The housing may further comprise an end shield configured to delimit the stator accommodation space on its side opposite to the stop. The end shield may be fastened to the main part.

The spacer may made of an electrically insulating material. Preferably, the spacer is made of a polymer. The spacer may be made by injection molding.

In another embodiment, the spacer is made of aluminum.

Preferably, the spacer is formed annularly about the longitudinal axis. In particular, the spacer is formed as a single piece.

Preferably, the housing forms a coolant inlet for supplying a coolant into the interior of the housing for cooling the stator. The coolant may be water, oil, a cooling agent or a gaseous fluid. The electric drive may comprise a pump device configured to convey the coolant to the inlet along a closed cooling circuit.

The electric drive according to the invention may further comprise a first oil jet ring being attached to the first face side of the stator core at a radial position between the first winding head and the spacer so that the spacer and the first oil jet ring delimit radially a first fluid chamber being connected to the inlet in a fluid conductive manner. Therein, the first oil jet ring may be configured to jet a coolant from the first fluid chamber towards the first winding head. This allows to implement a spray cooling of the first winding head so as to effectively dissipate heat therefrom during operation of the electric drive.

In particular, the first oil jet ring is provided with a plurality of nozzles which allow the coolant to flow form the first fluid chamber to the first winding head. The nozzles may be distributed circumferentially about the longitudinal axis.

The first oil jet ring may made of an electrically insulating material. Preferably, the first oil jet ring is made of a polymer. The first oil jet ring may be made by injection molding.

In another embodiment, the first oil jet ring is made of aluminum.

According to a preferred design, the housing and the stator core delimit radially a cooling jacket being connected to the inlet in a fluid conductive manner and configured to guide the coolant along an outer periphery of the stator core. This allows to effectively dissipate heat from the stator core during operation of the electric drive. It is highly preferred that the spacer comprises an opening that connects the first fluid chamber and the cooling jacket in a fluid conductive manner. Thereby, the spacer adapts the axial extent of the cooling jacket to the length of the stator and allows to supply the coolant from the cooling jacket into the first fluid chamber. The spacer may comprise two annular protrusions being spaced apart axially and delimiting the first fluid chamber axially. Additionally, the interior of the housing may form two annular protrusions corresponding to the protrusions of the first oil jet ring and being arranged at an axial position beyond the stop as seen from the stator. Therein, the protrusions formed by the housing can delimit the first fluid chamber, when a longer stator is disposed in the stator accommodation space. In other words, the protrusions of the spacer emulate the protrusions formed by the housing for the smaller stator used in the electric drive according to the invention.

The electric drive may further comprise a second oil jet ring being attached to the second face side of the stator core at a radial position radially more outward than the second winding head so that the housing and the second oil jet ring delimit radially a second fluid chamber being connected to the inlet in a fluid conductive manner. Therein, the second oil jet ring may be configured to jet the coolant from the second fluid chamber towards the second winding head. This allows to effectively dissipate heat form the second winding head.

In particular, the axial extent of the second oil jet ring may be chosen such the second oil jet ring adapts the length of the stator to the axial extent of the stator accommodation space.

Preferably, the cooling jacket and the second fluid chamber are connected in a fluid conductive manner.

The electric drive according to the invention may further comprise an inverter disposed in an inverter accommodation space formed by the housing on a side opposite to the stator accommodation space. Such an electric drive provides an integrated solution for propelling a vehicle. The inverter accommodation space by be formed by the main part of the housing. The housing may further comprise an inverter cover fastened to the main part for closing the inverter accommodation space. Further, the electric drive may further comprise a rotor forming an electric machine with the stator. The electric machine may be a permanently or electrically excited motor or an induction motor. The electric drive may further comprise a rotor shaft connected to the rotor in a torque-proof manner. Additionally, the electric drive may comprise an output shaft and a gearbox coupling the rotor shaft with the output shaft mechanically. The gearbox may be arranged in the housing. The housing may further comprise a gear box cover fastened to the main part at a side opposite to the end shield.

The above object is further solved by a method for manufacturing an electric drive for a vehicle, the method comprising steps of: providing a stator comprising a stator winding and a stator core having a longitudinal axis and opposing axial first and second face sides, the stator winding forming a first winding head at the first face side and a second winding head at the second face side; providing a housing with an interior that forms a stator accommodation space and a radial stop, which delimits the stator accommodation space axially; evaluating, whether an axial length of the stator core lies within at least one of at least two predefined ranges; attaching a spacer to the first face side at a radial position more outward than the first winding head, if the axial length lies within the at least one of the at least two ranges; and arranging the stator into the stator accommodation space such that the spacer abuts against the stop, if the axial length lies within the at least one of the at least two ranges, and such that the first face side abuts against the stop, otherwise.

The method may comprise further steps of evaluating, in which one of multiple predefined subranges of a respective one of the ranges the length of the stator core lies; and attaching a second oil jet ring to the second face side of the stator core at a radial position more outward than the second winding head, wherein, if the axial length lies within a first one of the subranges, a first type second oil ring with a first oil ring length, is used and, if the axial length lies in a second one of the subranges, a second type second oil ring with a second oil ring length being smaller than the first axial length is used.

Preferably, in the step of attaching the second oil jet ring, a third type second oil ring with a third oil ring length being smaller than the second oil ring length is used, if the axial length lies within a third one of the subranges.

The method may further comprise the following step: choosing, depending on the evaluation of the subrange, an end shield out of a group of a first to n^{th} type end shields depending on evaluation of the subranges and closing the stator accommodation space by means of the chosen end shield, wherein n corresponds to the number of subranges.

The above object is further solved by a vehicle comprising an electric drive according to the invention or an electric drive obtained by the manufacturing method according to the invention, the electric drive being configured to propel the vehicle.

The vehicle may be a battery electric vehicle (BEV). Alternatively, the vehicle may be a hybrid vehicle and further comprise a combustion engine.

All statements concerning the electric drive according to the invention apply analogously to the method according to the invention so that the advantages describe above can be achieved with the method as well.

Further details and advantages of the invention are described in the following embodiments with reference to the drawings. The drawings show schematically:
- Fig. 1: a principle drawing of an embodiment of an electric drive according to the invention;
- Fig. 2: a partial view of the housing according to the embodiment;
- Fig. 3: a perspective view of the stator and the spacer according to the embodiment;
- Fig. 4: a cross-sectional view of the electric drive according to the embodiment;
- Fig. 5: a flow diagram of an embodiment of a manufacturing method according to the invention;
- Fig. 6: principle drawings of an electric drives obtained by the embodiment of the method; and
- Fig. 7: a principle drawing of an embodiment of a vehicle according to the invention.

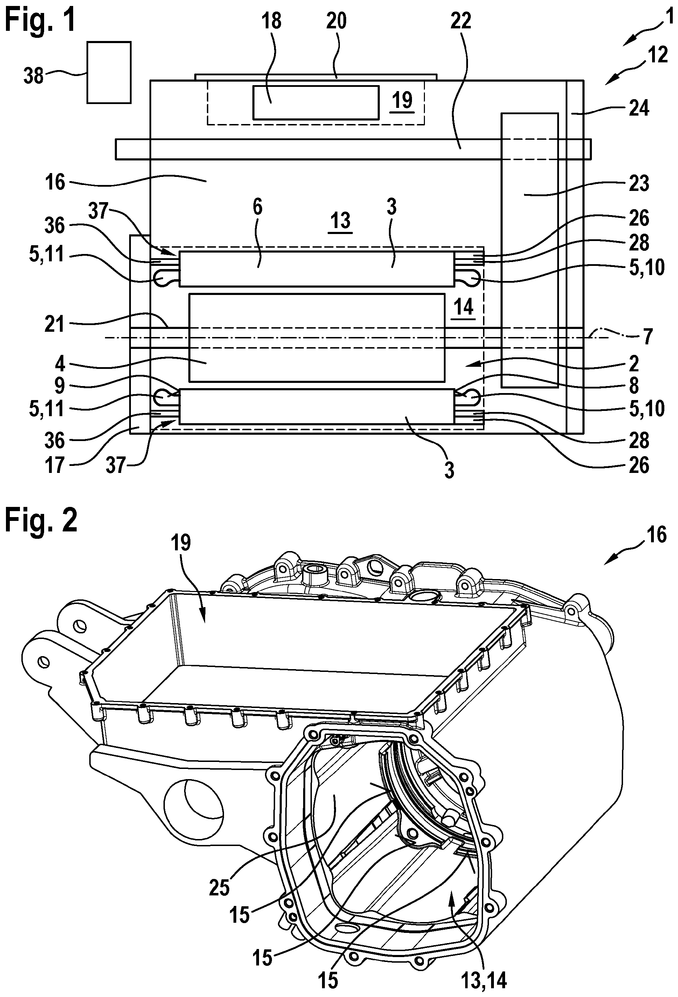

Fig. 1 is a principle drawing of an embodiment of an electric drive 1.

The electric drive 1 comprises an electric machine 2 having a stator 3 and a rotor 4. The electric machine 2 may be a permanently or electrically excited synchronous machine or an induction machine.

The stator 3 comprises a stator winding 5 and a stator core 6. The stator core 6 has a longitudinal axis 7 and opposing axial first and second face sides 8, 9. The stator winding 5, which is only partially visible in Fig. 1, forms a first winding head 10 at the first face side 8 and a second winding head 11 at the second face side 9.

In particular detail, the stator core 3 is made of a plurality of stacked metal sheets which are electrically insulated against each other. In further detail, the stator winding 5 is exemplarily formed as a hair pin winding, in which the first winding head 10 comprises welding connections of respective hair pin conductors that form the stator winding 5. Accordingly, the second winding head 11 is formed by bended head parts of the hair pin conductors.

The electric drive 1 further comprises a housing 12. An interior 13 of the housing 12 forms a stator accommodation space 14 and a radial stop 15 (see Fig. 2), which delimits the stator accommodation space 14 axially.

As an exemplary design, the housing 12 comprises a main part 16, which forms the stator accommodation space 14, and an end shield 17 fastened to the main part 16. The end shield 17 delimits the stator accommodation space 14 on its side opposite to the stop 15.

As further components, the electric drive 1 comprises an inverter 18 disposed in an inverter accommodation space 19 formed by the main part 16 of the housing 12 on a side opposite to the stator accommodation space 14. The inverter accommodation space 19 is closed by a cover 20 of the housing 12.

Moreover, Fig. 1 shows a rotor shaft 21 extending along the longitudinal axis 7, being coupled in a torque-proof manner to the rotor 4 and supported by the end shield 17. The rotor shaft 21 is coupled to an output shaft 22 of the electric drive 1 by a gearbox 23. The gearbox 23 is disposed in the main part 16 and faces the first face side 8 of the stator 6. The main part 16 is closed by a gearbox cover 24 of the housing 12.

Fig. 2 is a partial view of the housing 12 according to the embodiment, in which the main part 16 is shown.

As can be seen, the stator accommodation space 14 is a cylindrical space limited radially by a wall 25 of the housing 12 or its main part 16, respectively. The stator accommodation space 14 is open on its two axial sides. The stop 15 is formed at multiple circumferential separate positions, of which three are visible in Fig. 2, and forms an integral part of the housing 12.

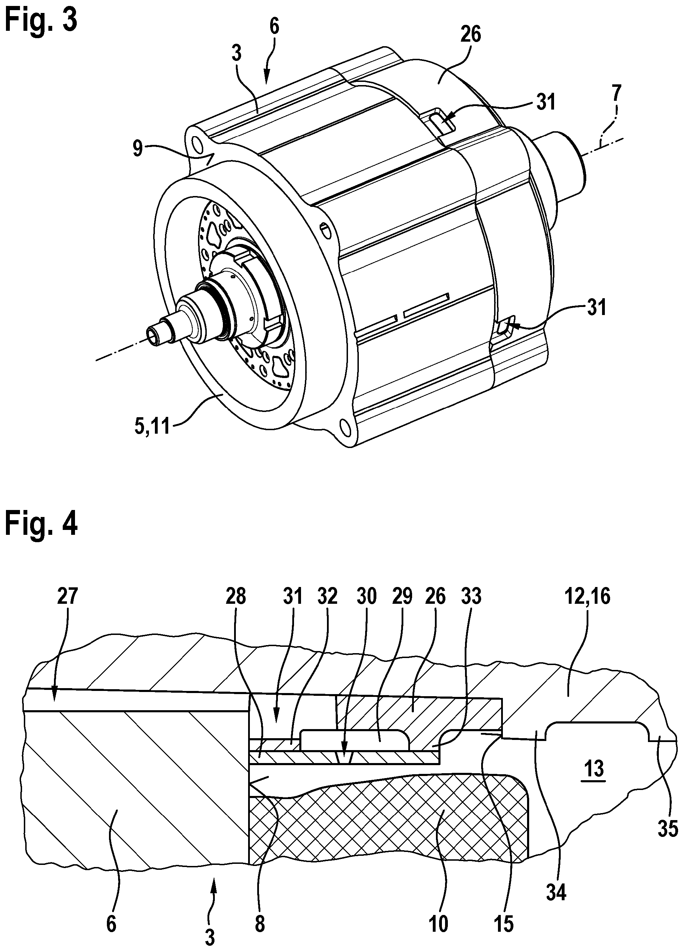

Fig. 3 is a perspective view of the stator 6 and a spacer 26 according to the embodiment. Fig. 4 is a partial cross-sectional view of the electric drive 1.

The spacer 26 forms part of the electric drive 1 and is attached to the first face side 8 (hidden in Fig. 3) of the stator core 6 at a radial position more outward than the first winding head 10 (hidden in Fig. 3) and abuts against the stop 15 as can be seen best in Fig. 4. Thereby, the spacer 26 adapts the length of the stator 3 to the length of the stator accommodation space 14 so as to allow to dispose stators of variable length inside the housing 12.

As can be seen best in Fig. 3, the spacer 26 is formed annularly about the longitudinal axis 7. In detail, the spacer 26 is formed as a single piece made of an electrically insulating polymer. In particular, the spacer 26 is made by injection molding. But in another embodiment, the spacer 26 can be formed as a single piece made of aluminum.

The electric drive 1 according to the present embodiment is additionally provided with a stator cooling. Thereto, the housing 12 forms a coolant inlet (not shown) for supplying a coolant into the interior 13 of the housing 12 for cooling the stator 3. The inlet is formed as an opening in the wall 25 of the housing 12 and allows to supply a fluid such as oil, water, a cooling agent or a gaseous coolant to the stator 3.

As one part of the stator cooling, a cooling jacket 27 is provided, which is delimited radially by the housing 12 or its main part 16, respectively, and the stator core 6. The cooling jacket 27 is connected to the inlet in a fluid conductive manner and configured to guide the coolant along an outer periphery of the stator core 6. That is, the coolant flows circumferentially around the outer periphery of the stator core 6 for dissipating heat generated inside the stator 3.

As further part of the stator cooling, the electric drive 1 comprises a first oil jet ring 28 being attached to the first face side 8 of the stator core 6 at a radial position between the first winding head 10 and the spacer 26 so that the spacer 26 and the oil jet ring 28 delimit radially a first fluid chamber 29. The first oil jet ring 28 is configured to jet a coolant from the first fluid chamber 29 towards the first winding head 10. For this purpose, the first oil jet ring 28 is provided with a plurality of nozzles 30, of which one is visible Fig. 4. The nozzles 30 are distributed circumferentially in the first oil jet ring 28.

As can be seen best in Fig. 3, the spacer 26 comprises a plurality of openings 31, of which two are hidden in Fig. 3. Each opening 31 connects the first fluid chamber 29 and the cooling jacket 27 in a fluid conductive manner so that the coolant can be supplied from the inlet into the first fluid chamber 29.

As can be seen best in Fig. 4, the spacer 26 comprises two annular protrusions 32, 33 being spaced apart axially and delimiting the first fluid chamber 29 axially. The interior 13 of the housing 12 forms two annular protrusions 34, 35 corresponding to the protrusions 32, 33 of the first oil jet ring 28. The protrusions 34, 35 are arranged at an axial position beyond the stop 15 as seen from the stator 3. When a longer stator than the stator 3 of the present embodiment is provided to the housing 12, this stator may abut directly against the stop 15. In this case the protrusions 34, 35 in the housing 12 serve as axial limitation of a corresponding first fluid chamber. Again with reference to Fig. 1, the electric drive 1 comprises a second oil jet ring 36 being attached to the second face side 9 of the stator core 6 at a radial position radially more outward than the second winding head 11 so that the housing 12 and the second oil jet 36 ring delimit radially a second fluid chamber 37 being connected to the inlet in a fluid conductive manner. The second oil jet ring 36 is configured to jet the coolant from the second fluid chamber 37 towards the second winding head 11 and may be provided with similar nozzles as the first oil jet ring 28. Correspondingly, the cooling jacket 27 and the second fluid chamber 37 are connected in a fluid conductive manner.

For supplying the coolant into the inlet, the electric drive 1 is provided with a pump device 38, which is schematically indicated in Fig. 1. The inlet, the cooling jacket 27 and the fluid chambers 29, 37 may form part of a closed cooling circuit, in which the pump device 38 conveys the coolant.

In the following, an embodiment of a method for manufacturing an electric drive is described in detail. The electric drive 1 according to the above embodiment may be obtained by the manufacturing method. For reasons of simplicity, equal or equivalent components used in the manufacturing method are provided with the same reference numerals as in the above embodiment of the electric drive 1.

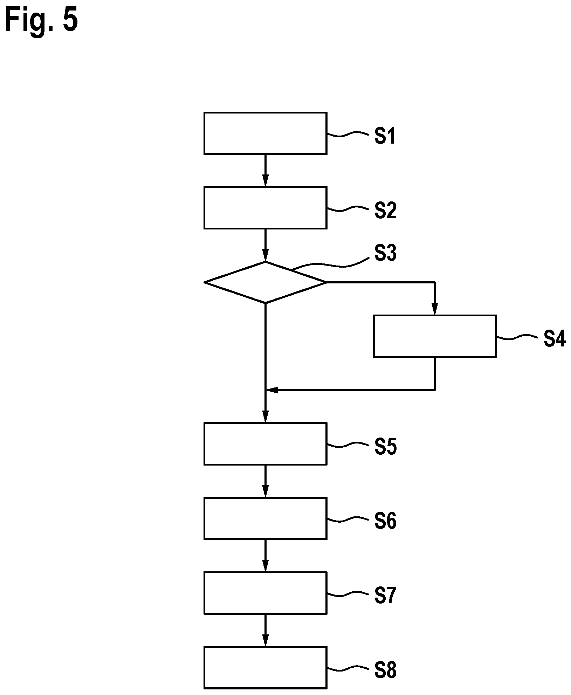

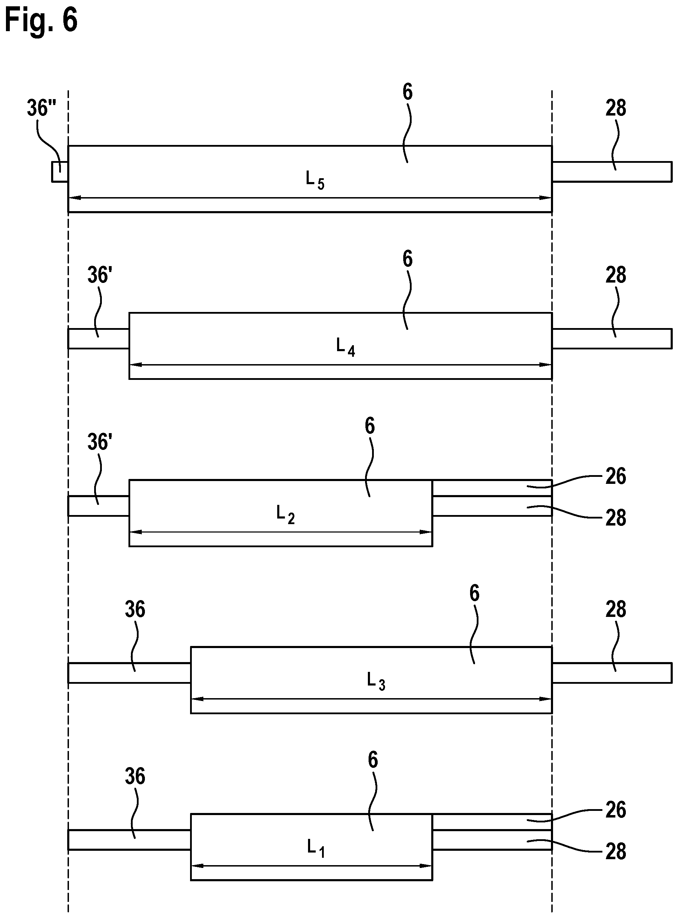

Fig. 5 is a flow diagram of an embodiment of the manufacturing method. Fig. 6 shows five principle drawings of an electric drives 1 obtained by the embodiment of the method. Therein, Fig. 6 schematically shows five stators 3 with different lengths L₁ to L₅ with L₁ < L₂ < L₃ < L₄ < L₅ of their respective stator core 6.

The method comprises a step S1 of providing a stator 3. The stator 3 comprises a stator winding 5 and a stator core 6 having a longitudinal axis 7 and opposing axial first and second face sides 8, 9. The stator winding 5 forms a first winding head 10 at the first face side 8 and a second winding head 11 at the second face side 9.

The method comprises a further step S2 of providing a housing 12 with an interior 13 that forms a stator accommodation space 14 and a radial stop 15, which delimits the stator accommodation space 14 axially.

The method comprises a further step S3 of evaluating, whether an axial length of the stator core 6 lies within one of two predefined ranges. A range R₁ covers lengths L₁ and L₂. The other range R₂ covers lengths L₃, L₄ and L₅. Further, each range R₁, R₂ is subdivided into three subranges SR₁, SR₂, SR₃. In range R₁, subrange SR₁ covers length L₁ and subrange SR₂ covers length L₂. In range R₂, subrange SR₁ covers length L₃, subrange SR₂ covers length L₄ and subrange SR₃ covers length L₅. Note that in this specific embodiment no length is assigned to subrange SR₃ in range R₁.

In a subsequent step S4, a spacer 26 is attached to the first face side 8, if the axial length lies within range R₁. The spacer 26 is attached to the first face side 8 at a radial position more outward than the first winding head 10.

Subsequent to step S4 or in the case that the evaluation of step S3 results in that the length lies within range R₂, the method comprises a further step S5 of evaluating, in which one of the predefined subranges SR₁, SR₂, SR₃ the axial length of the stator core 6 lies.

Depending on the result of the evaluation in step S5, in a subsequent step S6, a second oil jet ring 36, 36', 36" is attached to the second face side 9 of the stator core 6 at a radial position radially more outward than the second winding head 11. If the axial length lies within subrange SR₁, a first type second oil ring 36 with a first oil ring length, is used. If the axial length lies within subrange SR₂, a second type second oil ring 36' with a second oil ring length being smaller than the first oil ring length is used. If the axial length lies within subrange SR₃, a third type second oil jet ring 36" with a third oil ring length being smaller than the second oil ring length is used.

In a subsequent step S7, the stator 3 is arranged into the stator accommodation space 14. Therein, the stator 3 is arranged into the stator accommodation space 14 such that the spacer 26 abuts against the stop 15, if - depending on the evaluation in step S3 - the axial length L₁, L₂ lies in range R₁. If the axial length L₃, L₄, L₅ lies in range R₂, the stator 3 is arranged into the stator accommodation space 14 such that the first face side 8 abuts against the stop 15.

In a subsequent step S8, an end shield 17 is chosen out of a group of a first, second and third type end shield 17 depending on evaluation of the subranges SR₁, SR₂, SR₃ (see step S5) and arranged at the main part 16 for closing the stator accommodation space 14. I.e., depending on type of second oil jet ring 36, 36', 36" a suitable type of end shield 17 for forming the second fluid chamber 37 is chosen.

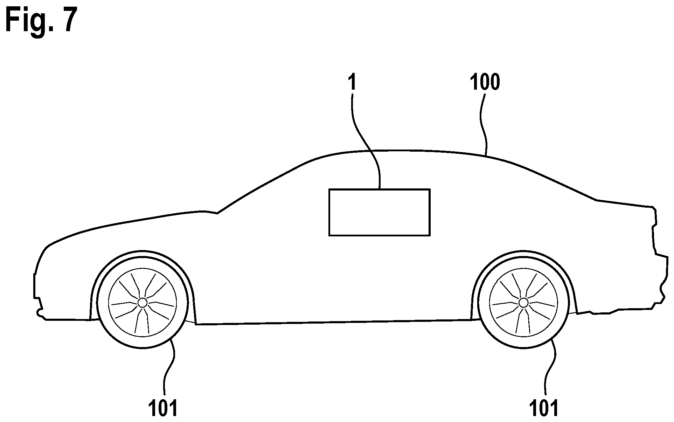

Fig. 7 is a principle drawing of an embodiment of a vehicle 100 comprising and an electric drive 1 according to the above embodiment or obtained by the above embodiment of the manufacturing method.

The electric drive 1 is configured to propel the vehicle 100. The electric vehicle 100 comprises wheels 101 coupled with the electric drive 1 so as to rotate the wheels 101. According to the embodiment, the electric vehicle 100 is a battery electric vehicle (BEV). Alternatively, the electric vehicle 100 may additionally comprise a combustion engine, therein forming a hybrid vehicle. Further, the electric vehicle 100 may comprise a fuel cell supplying the stator windings 5 of stator 3.

## Claims

1. Electric drive (1) for a vehicle (100), the electric drive (1) comprising:
- a stator (3) comprising a stator winding (5) and a stator core (6) having a longitudinal axis (7) and opposing axial first and second face sides (8, 9), the stator winding (5) forming a first winding head (10) at the first face side (8) and a second winding head (11) at the second face side (9); and
- a housing (12) with an interior (13) that forms a stator accommodation space (14) and a radial stop (15), which delimits the stator accommodation space (14) axially;
**characterized by**
- a spacer (26) being attached to the first face side (8) at a radial position more outward than the first winding head (10) and abutting against the stop (15).

2. Electric drive according to claim 1, wherein
the spacer (26) is formed annularly about the longitudinal axis (7).

3. Electric drive according to claim 1 or 2, wherein
the housing (12) forms a coolant inlet for supplying a coolant into the interior (13) of the housing (12) for cooling the stator (3).

4. Electric drive according to claim 3, further comprising
- a first oil jet ring (28) being attached to the first face side (8) of the stator core (6) at a radial position between the first winding head (10) and the spacer (26) so that the spacer (26) and the first oil jet ring (28) delimit radially a first fluid chamber (29) being connected to the inlet in a fluid conductive manner, the first oil jet ring (28) being configured to jet a coolant from the first fluid chamber (29) towards the first winding head (10).

5. Electric drive according to claim 3 or 4, wherein
the housing (12) and the stator core (6) delimit radially a cooling jacket (27) being connected to the inlet in a fluid conductive manner and configured to guide the coolant along an outer periphery of the stator core (6).

6. Electric drive according to claim 4 and 5, wherein
the spacer (26) comprises an opening (31) that connects the first fluid chamber (29) and the cooling jacket (27) in a fluid conductive manner.

7. Electric drive according to any of claims 4 to 6, wherein
the spacer (26) comprises two annular protrusions (32, 33) being spaced apart axially and delimiting the first fluid chamber axially (29).

8. Electric drive according to claim 7, wherein
the interior (13) of the housing (12) forms two annular protrusions (34, 35) corresponding to the protrusions (32, 33) of the first oil jet ring (28) and being arranged at an axial position beyond the stop (15) as seen from the stator (3).

9. Electric drive according to any of claims 3 to 8, further comprising
- a second oil jet ring (36, 36') being attached to the second face side (9) of the stator core (6) at a radial position radially more outward than the second winding head (11) so that the housing (12) and the second oil jet ring (36, 36') delimit radially a second fluid chamber (37) being connected to the inlet in a fluid conductive manner, the second oil jet ring (36) being configured to jet the coolant from the second fluid chamber (37) towards the second winding head (11).

10. Electric drive according to claim 9, when being dependent on claim 5, wherein the cooling jacket (27) and the second fluid chamber (37) are connected in a fluid conductive manner.

11. Electric drive according to any of the preceding claims, further comprising
- an inverter (18) disposed in an inverter accommodation space (19) formed by the housing (12) on a side opposite to the stator accommodation space (14).

12. Method for manufacturing an electric drive (1) for a vehicle (100), the method comprising steps of:
- providing a stator (3) comprising a stator winding (5) and a stator core (6) having a longitudinal axis (7) and opposing axial first and second face sides (8, 9), the stator winding (5) forming a first winding head (10) at the first face side (8) and a second winding head (11) at the second face side (9);
- providing a housing (12) with an interior (13) that forms a stator accommodation space (14) and a radial stop (15), which delimits the stator accommodation space (14) axially;
- evaluating, whether an axial length (L₁, L₂, L₃, L₄, L₅) of the stator core (6) lies within at least one of at least two predefined ranges (R₁, R₂);
- attaching a spacer (26) to the first face side (8) at a radial position more outward than the first winding head (10), if the axial length lies within the at least one of the at least two ranges (R₁, R₂); and
- arranging the stator (3) into the stator accommodation space (14) such that the spacer (26) abuts against the stop (15), if the axial length (L₁, L₂) lies within the at least one of the at least two ranges (R₁), and such that the first face side (8) abuts against the stop (15), otherwise.

13. Method according to claim 12, further comprising steps of:
- evaluating, in which one of multiple predefined subranges (SR₁, SR₂, SR₃) of a respective one of the ranges (R₁, R₂) the length (L₁, L₂, L₃, L₄, L₅) of the stator core (6) lies;
- attaching a second oil jet ring (36, 36', 36") to the second face side (9) of the stator core (6) at a radial position more outward than the second winding head (11), wherein, if the axial length (L₁, L₃) lies within a first one of the subranges (SR₁), a first type second oil ring (36) with a first oil ring length, is used and, if the axial length lies in a second one of the subranges (SR₂), a second type second oil ring (36') with a second oil ring length being smaller than the first oil ring length is used.

14. Method according to claim 13, wherein
in the step of attaching the second oil jet ring (36, 36', 36"), a third type second oil jet ring (36") with a third oil ring length being smaller than the second oil ring length is used, if the axial length (L₁) lies wihtin a third one of the subranges (SRₛ).
